# FASCICULE DE BREVET EUROPEEN

(11) **EP 3 274 637 B1**
(45) Date de publication et mention de la délivrance du brevet: **11.09.2019**
(21) Numéro de dépôt: 16717421.8
(22) Date de dépôt: 23.03.2016
(51) Int. Cl.: F23M 7/04, F24H 8/00

(54) **CHAUDIÈRE ET PORTE POUR LADITE CHAUDIÈRE**
KESSEL UND TÜR ZU DIESEM KESSEL
BOILER AND DOOR TO SAID BOILER

(30) Priorité: 23.03.2015 FR 1552390
(43) Date de publication de la demande: 31.01.2018
(73) Titulaire: ENGIE, 92400 Courbevoie (FR)
(72) Inventeur: GALTEAU, Alain, 95380 Puiseux En France (FR); RUILLARD, Romain, 91700 Saint Genevieve Des Bois (FR); GAVAN, Valentin-Florian, 92500 Rueil-Malmaison (FR)
(74) Mandataire: Cornuejols, Georges
(86) Numéro de dépôt international: PCT/FR2016/050637
(87) Numéro de publication internationale: WO 2016/151242

(56) Documents cités:
- DE-A1- 10 235 601
- DE-A1-102010 028 879
- DE-C1- 19 715 989
- FR-A- 1 312 844
- US-A- 4 942 863
- US-A1- 2007 221 205
- US-A1- 2014 230 869

## Description

### DOMAINE TECHNIQUE DE L'INVENTION

La présente invention vise une porte pour une chaudière. Elle s'applique, notamment, à l'alimentation électriquement autonome de chaudières d'habitations individuelles ou collectives. Le document US 2007/0221205 A1 divulgue un porte pour chaudière selon le préambule de la revendication 1.

### ETAT DE LA TECHNIQUE

Dans le domaine de la production individuelle d'eau chaude en habitation individuelle ou logement collectif, de type circuit de chauffage ou eau chaude sanitaire (abrévié « ECS »), trois besoins actuels ne sont pas correctement remplis.

Le premier besoin vient du fait que la plupart des systèmes de chauffage individuels actuels, outre les pompes, ventilateurs et vannes, ont une fonction électronique « intelligente », c'est à dire de surveillance, de contrôle, de régulation et de sécurité par exemple. Ces systèmes de chauffage nécessitent pour cela une alimentation par le réseau électrique. Si cette énergie électrique vient à manquer, les fonctions de base d'intelligence se mettent en veille et mettent la chaudière à l'arrêt notamment pour des raisons de sécurité, ce qui est un inconvénient d'usage majeur.

Le deuxième besoin vient du fait que, lors d'une coupure électrique dans un logement, d'autres équipements cruciaux sont impactés : réfrigérateur, congélateur et systèmes de communications notamment. Cet arrêt est également un inconvénient d'usage majeur.

Le troisième besoin provient du contexte actuel qui pousse les constructeurs à développer des équipements fonctionnant au gaz naturel capables de produire à la fois de la chaleur sur un réseau d'eau et de l'électricité, à l'échelle des logements individuels et collectifs.

Pour répondre à ces trois besoins simultanément, il n'existe pas aujourd'hui de solution satisfaisante.

En effet, on connaît également des systèmes de chauffe-bain intégrant une dynamo dans le circuit d'eau froide, la dynamo fournissant l'électricité nécessaire à l'appareil sans nécessiter de raccordement au réseau électrique, ou des systèmes de chauffage de type thermosiphon, dans lesquels le liquide caloporteur réchauffé dans le générateur thermique, plus léger, monte vers un échangeur situé en partie haute de l'installation pour céder ses calories à l'air ambiant. Le fluide caloporteur refroidi redescend naturellement vers le bas de l'installation pour être réchauffé par le générateur et recommencer le cycle en continu sans avoir de pompe de circulation.

Ces deux types de systèmes présentent un encombrement trop important pour une utilisation individuelle ou en logement collectif. De plus ces systèmes demandent des aménagements spéciaux et ne peuvent fonctionner que dans des conditions particulières, très contraignantes (diamètres importants des canalisations, présence d'une pente, puissance limitée, nombre d'émetteurs limité, faible rendement). Ce type d'installation demande une surface de développement importante, impossible donc de l'appliquer par exemple dans les habitations actuelles.

On connaît également des systèmes thermoélectriques permettant de produire de l'électricité à partir des produits de combustion sortant du moteur à combustion. L'énergie contenue dans les produits de combustion sortant des chaudières actuelles est quasiment nulle, et avec un niveau de température proche de la température ambiante, rendant inefficace tout transfert thermique avec un autre fluide disponible dans une habitation (eau du circuit de chauffage, air ambiant).

On connaît également des systèmes de cogénération. Cependant, ces systèmes commercialisés actuellement présentent l'inconvénient d'être complexes et d'entraîner des coûts d'investissement et de maintenance élevés. De plus pour ces appareils, à une puissance électrique produite, correspond une puissance thermique donnée qui doit obligatoirement être dissipée, même s'il n'y a pas de besoin dans le logement.

Ainsi, comme on le comprend, il n'existe pas de solution simple répondant aux besoins précités.

On connaît des systèmes décrits dans la demande de brevet US 2014/230869. Dans ces systèmes, un brûleur envoie des produits de combustion vers les parois d'une chambre de combustion. Pour récupérer une partie de la chaleur sous forme d'énergie électrique, des convertisseurs thermoélectriques sont positionnés dans une paroi externe de la chambre de combustion, à l'interface entre les produits de combustion et un fluide caloporteur.

Si l'on souhaite récupérer de l'énergie issue des produits de combustion du brûleur, il faut que la chambre de combustion munie des convertisseurs thermoélectriques présente une longueur importante. La taille des chaudières compactes actuelles impose une faible longueur de l'échangeur, ce qui, dans ce cas provoque un rendement faible de systèmes décrits dans le document US 2014/230869, rendant leur exploitation commerciale improbable.

### OBJET DE L'INVENTION

La présente invention vise à remédier à tout ou partie de ces inconvénients.

A cet effet, la présente invention vise une porte pour chaudière selon la revendication 1, la chaudière étant électriquement autonome et comportant une chambre de combustion, munie d'au moins un brûleur, et un système électrique agencé pour assurer le fonctionnement de la chaudière. Ladite porte comporte :
- un convertisseur thermoélectrique d'énergie thermique générée par au moins un brûleur en énergie électrique par effet Seebeck et
- une sortie de l'énergie électrique, fournie par un convertisseur, au système électrique de la chaudière.

Grâce à ces dispositions, une partie de l'énergie thermique générée par le brûleur de la chaudière est fournie, par un convertisseur thermoélectrique, en énergie électrique permettant l'alimentation électrique de la chaudière. De cette manière, la chaudière est capable de fonctionner même en l'absence d'alimentation externe de courant tant que le brûleur de la chaudière est alimenté en gaz naturel.

De plus, selon l'invention, le convertisseur thermoélectrique d'énergie est positionné au contact :
- d'une part, d'un premier élément conducteur de la porte orienté vers des produits de combustion de la chambre de combustion de la chaudière, formant source chaude du convertisseur et
- d'autre part, d'un deuxième élément conducteur orienté vers un fluide caloporteur de la chaudière formant source froide du convertisseur.

Dans des modes de réalisation, la porte objet de la présente invention comporte un circuit de refroidissement du deuxième élément conducteur par circulation de fluide caloporteur provenant d'un condenseur de la chaudière.

Ces modes de réalisation permettent de réaliser un refroidissement du deuxième élément de manière à augmenter le rendement du convertisseur thermoélectrique.

Dans des modes de réalisation, la porte objet de la présente invention comporte une structure creuse entourant une ouverture de la porte, le convertisseur étant positionné au contact :
- d'une part, d'une première partie conductrice de la structure configurée pour être orientée vers des produits de combustion de la chambre de combustion de la chaudière, formant source chaude du convertisseur et
- d'autre part, d'une deuxième partie conductrice de la structure configurée pour être orientée vers un fluide caloporteur de la chaudière formant source froide du convertisseur.

Ces modes de réalisation permettent une fabrication séparée de la structure creuse et du reste de la porte.

Dans des modes de réalisation, la porte objet de la présente invention comporte un moyen de stockage de l'énergie électrique fournie par le convertisseur pour alimenter le système électrique de la chaudière.

Ces modes de réalisation permettent de stocker l'énergie électrique fournie par un convertisseur en vue d'une utilisation ultérieure, notamment pour mettre en marche une chaudière initialement à l'arrêt.

Dans des modes de réalisation, la sortie d'énergie électrique fournie par le convertisseur est configurée pour alimenter un dispositif externe à la chaudière.

Ces modes de réalisation permettent d'alimenter un réfrigérateur, un système de communication ou un congélateur en électricité par exemple.

Dans des modes de réalisation, un transformateur, alimenté par le convertisseur thermoélectrique, alimente un module de chauffage d'eau électrique.

Ces modes de réalisation permettent d'échauffer de l'eau sortant d'un module condenseur de la chaudière. En effet, il faut que l'eau entrant dans la chaudière alimente toujours en premier un condenseur afin de ne pas dégrader le rendement global de la chaudière. Ces modes de réalisation permettent notamment de recycler le surplus d'énergie produite.

### BREVE DESCRIPTION DES FIGURES

D'autres avantages, buts et caractéristiques particulières de l'invention ressortiront de la description non limitative qui suit d'au moins un mode de réalisation particulier de la porte objet de la présente invention, en regard des dessins annexés, dans lesquels :
- la figure 1 représente, schématiquement et en coupe, une chaudière,
- la figure 2 représente, schématiquement et en coupe, un mode de réalisation particulier de la porte objet de la présente invention,
- la figure 3 représente, schématiquement et en coupe, un mode de réalisation particulier de la porte objet de la présente invention,
- la figure 4 représente, schématiquement et en coupe, un mode de réalisation particulier de la porte objet de la présente invention,
- la figure 5 représente, schématiquement et en perspective, un mode de réalisation particulier de la porte objet de la présente invention,
- la figure 6 représente, schématiquement et en coupe selon un premier axe, un échangeur thermique,
- la figure 7 représente, schématiquement et en coupe selon un deuxième axe, un échangeur thermique,
- la figure 8 représente, schématiquement et en coupe selon un troisième axe, un échangeur thermique et
- la figure 9 représente, schématiquement et en perspective, un mode de réalisation particulier de la porte objet de la présente invention.

### DESCRIPTION D'EXEMPLES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note que le terme « fluide caloporteur » désigne, par exemple, de l'eau.

On note dès à présent que les figures ne sont pas à l'échelle.

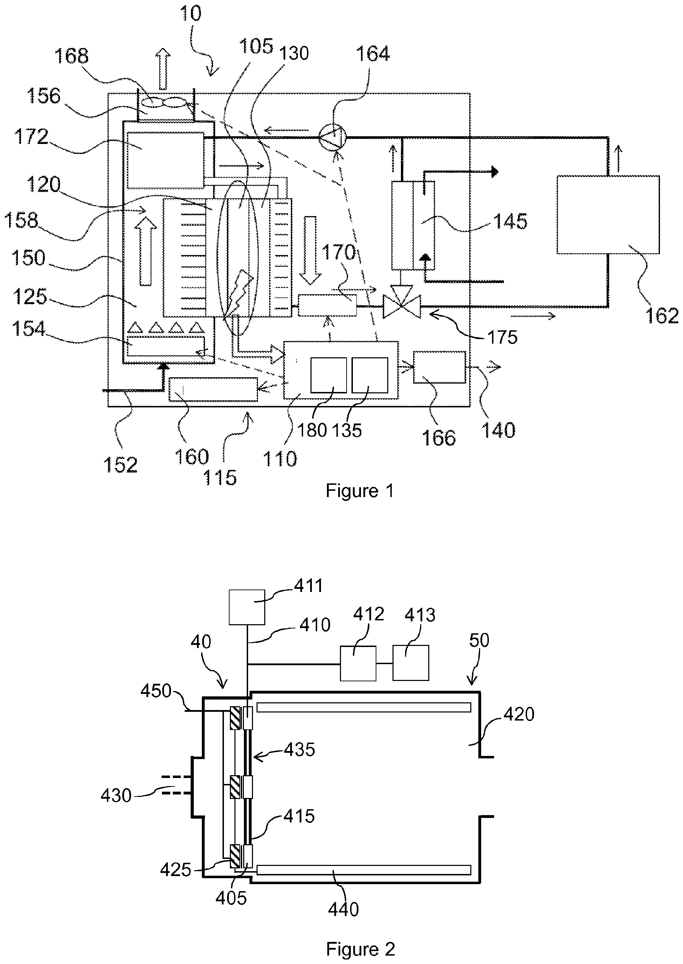

On observe, sur la figure 1, qui n'est pas à l'échelle, une chaudière 10. Cette chaudière 10 électriquement autonome comporte :
- un système 115 électrique agencé pour assurer le fonctionnement de la chaudière 10,
- une enceinte thermique 150 isolée comportant :
   - une chambre 125 de combustion,
   - au moins un brûleur 154, par une entrée 152 de combustible et
   - une sortie 156 pour produits de combustion,
- un échangeur thermique 158 positionné dans l'enceinte thermique 150 pour échauffer un fluide caloporteur à partir de la température de la chambre de combustion 125,
- un convertisseur 105 thermoélectrique d'énergie thermique générée par le brûleur 154 en énergie électrique par effet Seebeck et
- une sortie 110 de l'énergie électrique fournie par un convertisseur 105 au système 115 électrique de la chaudière 10.

L'enceinte thermique 150 isolée est, par exemple, une paroi métallique délimitant un volume formant chambre de combustion 125.

Cette enceinte thermique 150 est présente une ouverture d'entrée 152 de combustible. Ce combustible est, par exemple, du gaz naturel alimenté par une conduite connectée à un réseau gazier local.

Le combustible entré est brûlé par le brûleur 154 de manière à générer des produits de combustion à température élevée permettant l'échauffement du fluide caloporteur. Le démarrage du brûleur 154 nécessite notamment un apport en électricité pour générer des étincelles permettant la combustion du combustible.

Ce brûleur 154 est contrôlé par un moyen de commande 160, tel un circuit électronique exerçant des fonctions de contrôle, de surveillance, de commande, de régulation et de sécurité par exemple. Si ce moyen de commande 160 n'est pas alimenté en électricité, la chaudière 10 est maintenue dans une position de sécurité correspondant à une mise à l'arrêt du brûleur 154 et à l'impossibilité, sans alimentation électrique de la chaudière 10, de démarrer le brûleur 154.

Le brûleur 154 peut être positionné à la base de la chambre de combustion 125 de sorte que les produits de combustion parcourent la chambre de combustion 125 selon le sens de la hauteur jusqu'à la sortie 156 pour produits de combustion.

La sortie 156 est, par exemple, une conduite permettant aux produits de combustion de sortir du local dans lequel la chaudière 10 est positionnée, par le biais d'une cheminée notamment.

La chaudière 10 peut comporter un condenseur 172, positionné en regard de la sortie 156, agissant comme échangeur thermique 158 tel que décrit ci-dessous.

L'échangeur thermique 158 est, par exemple, un échangeur thermique 158 à plaques ou plan. Dans cet échangeur thermique 158, des convertisseurs 105 sont pris en tenaille entre d'une part une plaque côté fumées et d'autre part une plaque côté eau. Les parois de la conduite sont échauffées par les produits de combustion, cet échauffement étant transmis au fluide caloporteur en déplacement dans la conduite.

Dans des variantes, l'échangeur thermique 158 est de type serpentin, c'est à dire entrant dans et sortant de la chambre de combustion 125. Ce serpentin est tapissé de convertisseurs 105

Le convertisseur 105 thermoélectrique d'énergie thermique générée par le brûleur 154 en énergie électrique est, par exemple, un module thermoélectrique à effet Seebeck positionné à l'intérieur de la paroi de l'échangeur thermique 158 faisant interface entre la chambre de combustion 125 et l'intérieur de la conduite. De cette manière, une partie de l'énergie de l'échange thermique réalisé est fournie par un convertisseur 105 en énergie électrique.

L'intérêt du positionnement du convertisseur 105 à l'intérieur de l'échangeur thermique 158 tient au fait que c'est à cet endroit de la chaudière 10 que la majorité de l'énergie thermique des produits de combustion est transmise au fluide caloporteur.

L'énergie électrique, fournie par chaque convertisseur 105, est ensuite alimentée au moyen de commande 160 et/ou à tout autre système électrique 115 de la chaudière 10 nécessitant de l'électricité pour fonctionner. La sortie 110 de cette énergie est, par exemple, un bloc de gestion de l'énergie électrique de la chaudière 10. Ce bloc de gestion comporte, par exemple, une batterie, un moyen de transfert de l'énergie fournie par chaque convertisseur 105 à des systèmes électriques et un moyen de transfert de l'énergie de la batterie à des systèmes électriques de la chaudière 10. Ce bloc de gestion alimente également le moyen de commande 160 de la chaudière 10, ce moyen de commande étant, par exemple, un bloc de régulation.

Dans des variantes, les moyens mis en oeuvre dans la chaudière 10 fonctionnent à courant continu et à basse consommation.

Le déplacement du fluide caloporteur est assuré, par exemple, par une pompe 164 alimentée par une conduite de fluide caloporteur à réchauffer.

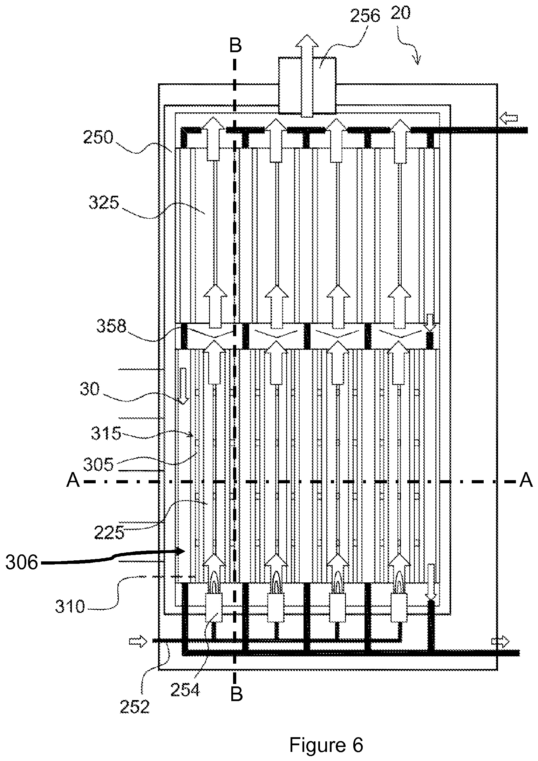

Cet échangeur thermique 158 et le condenseur 172 sont décrits en regard de la figure 6 ci-dessous.

Le fluide caloporteur échauffé est ensuite alimenté vers un émetteur 162 à eau chaude, tel un radiateur par exemple.

Le convertisseur 105 est positionné en regard :
- d'une part, d'un premier élément 120 conducteur orienté vers des produits de combustion de la chambre de combustion 125 de la chaudière 10 et
- d'autre part, d'un deuxième élément 130 conducteur orienté vers un fluide caloporteur de la chaudière 10.

La chaudière 10 peut comporter un moyen 135 de stockage de l'énergie électrique fournie par un convertisseur 105 pour alimenter l'énergie stockée le système 115 électrique de la chaudière 10. Le système électrique 115 est, par exemple, un bloc de régulation de la chaudière 10 ou tout autre système électrique interne de la chaudière 10 nécessitant une alimentation électrique pour fonctionner.

Ce moyen de stockage 135 est, par exemple, une batterie configurée pour alimenter au moins un élément parmi :
- le moyen de commande 160,
- un système d'allumage (non représenté) du brûleur 154,
- la pompe 164,
- une vanne 175 de type trois voies,
- un module 170 de chauffage d'eau électrique,
- un onduleur 166 et/ou
- un ventilateur 168 d'évacuation de produits de combustion présents dans la sortie 156 de produits de combustion.

La chaudière 10 peut comporter une sortie 140 d'énergie électrique fournie par un convertisseur 105 pour alimenter un dispositif externe à la chaudière. Cette sortie 140 d'énergie électrique est, par exemple, un ensemble formé par :
- un onduleur 166 pour rendre conforme le courant électrique converti à l'utilisation par le dispositif externe et
- un câble électrique de sortie du courant conforme muni d'une prise électrique femelle (non représentée) pour être connecté à chaque dispositif à alimenter.

Un transformateur 180, alimenté par un convertisseur 105 thermoélectrique, alimente un module 170 de chauffage d'eau électrique. Ce module 170 échauffe, par échange thermique, un fluide caloporteur sortant de l'échangeur thermique principal de la chaudière 10. De cette manière, un surplus d'énergie électrique peut être recyclé en énergie thermique.

Dès que le brûleur 154 est en fonctionnement, les convertisseurs 310 produisent de l'électricité proportionnellement à la chaleur transmise au fluide caloporteur. Lorsque la puissance électrique produite par les convertisseurs 310 est supérieure aux besoins de la chaudière 10 et éventuellement de dispositifs externes, le surplus est dirigé vers le module 170 de chauffage d'eau électrique placé en sortie de chaudière 10. Ainsi, pour une puissance thermique transmise à l'eau donnée, la puissance électrique produite peut être modulée jusqu'à zéro en fonction des besoins.

L'excès d'énergie électrique peut être réinjecté dans une résistance 170 pour échauffer davantage le fluide caloporteur.

La chaudière 10 peut comporter une pluralité d'échangeurs 30 thermiques tels que décrits en regard de la figure 6, au moins une caractéristique structurelle du convertisseur 305 d'énergie de chaque échangeur 30 variant en fonction du positionnement de cet échangeur 305 dans l'échangeur 30. Les échangeurs 30 thermiques sont, par exemple, des plaques verticales, les convertisseurs 305 étant horizontaux et présentant des caractéristiques structurelles différentes selon la hauteur de positionnement dans les échangeurs 30.

On observe, sur la figure 2, un mode de réalisation particulier de la porte 40 objet de la présente invention. Cette porte 40 pour chaudière 50, telle une chaudière décrite en regard des figures 1 ou 6 par exemple, comporte :
- un moyen (non représenté) de fixation à la chaudière 50 de manière à ce que le combustible traversant la porte 40 soit alimenté à un brûleur (non représenté) de la chaudière 50,
- une entrée 430 pour gaz,
- au moins un convertisseur 405 thermoélectrique d'énergie thermique générée par le brûleur en énergie électrique par effet Seebeck positionné au contact :
   - d'une part, d'un premier élément 415 conducteur de la porte 40 orienté vers des produits de combustion de la 420 de combustion de la chaudière 50, formant source chaude du convertisseur 405, et
   - d'autre part, d'un deuxième élément 425 conducteur orienté vers un fluide caloporteur de la chaudière 50 formant source froide du convertisseur 405 et
- une sortie 410 de l'énergie électrique, fournie par un convertisseur, à un système électrique de la chaudière 50.

L'entrée 430 est, par exemple, une conduite d'alimentation de gaz similaire à l'entrée 152 décrite en regard de la figure 1. L'entrée 430 dirige le gaz vers le centre de la porte 40 et contre une pièce 435 formant déflecteur positionné grossièrement perpendiculairement à l'arrivée du gaz. Le gaz contourne ce déflecteur pour alimenter le brûleur positionné dans la chambre de combustion 420.

La porte 40 est fixée à la chaudière 50 par la mise en oeuvre de clips ou de vis par exemple. La porte 40 est positionnée, par exemple, sous le brûleur.

La porte 40 comporte au moins un convertisseur 405. Dans des variantes préférentielles, la porte 40 comporte au moins quatre convertisseurs 405. Le nombre de convertisseurs 405 et la surface du déflecteur 435 couverte par des convertisseurs 405 dépend de la quantité d'énergie électrique à générer.

Chaque convertisseur 405 est, par exemple, un module thermoélectrique à effet Seebeck.

Dans des variantes, les convertisseurs 405 sont positionnés autour de l'entrée 430 pour gaz.

Chaque convertisseur 405 est positionné de sorte qu'une première face soit en regard du premier élément 415 conducteur, tel le déflecteur 435, de la porte 40 orienté vers la chambre 420 de combustion de la chaudière 50.

D'autre part, chaque convertisseur 405 est positionné en regard d'un deuxième élément 425 conducteur orienté vers un échangeur thermique 425 fixé contre le convertisseur 405 vers l'extérieur de la chambre 420 de combustion.

Dans des variantes, une pâte thermique est positionnée entre un convertisseur 405 et un échangeur thermique 425 associé.

Chaque échangeur thermique 425 est, par exemple, configuré pour échauffer un fluide caloporteur, tel de l'eau par exemple, par échange thermique entre le déflecteur 435 chaud et le fluide caloporteur plus froid. Ce différentiel de température permet au convertisseur d'absorber une partie de l'énergie thermique échangée pour générer de l'énergie électrique.

Dans des modes de réalisation préférentiels, le fluide caloporteur échauffé est alimenté à un échangeur thermique 440 de la chaudière 50 et échauffé par les produits de combustion dans la chambre de combustion 420.

L'énergie électrique fournie par un convertisseur est alimentée par la sortie 410 à un système électrique de la chaudière 50 ou à un dispositif externe.

Dans des modes de réalisation, la porte 40 comporte un moyen 411 de stockage de l'énergie électrique fournie par un convertisseur pour alimenter le système électrique de la chaudière.

Ce moyen de stockage 411 est similaire au moyen de stockage décrit en regard de la figure 1.

Dans des modes de réalisation, la porte 40 comporte un transformateur 412, alimenté par un convertisseur 405 thermoélectrique, alimente un module 413 de chauffage d'eau électrique.

Le transformateur 412 et le module 413 de chauffage d'eau sont similaires au transformateur et au module de chauffage d'eau décrits en regard de la figure 1.

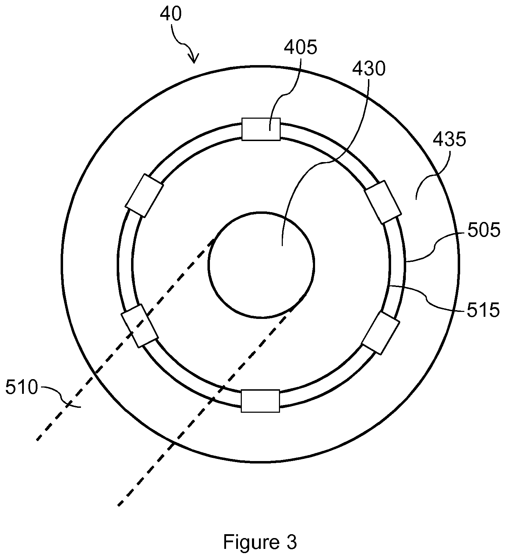

On observe, sur la figure 3, schématiquement, une vue en coupe et de face de la porte 40 objet de la présente invention. Cette porte 40 comporte un circuit 515 de refroidissement du deuxième élément 425 conducteur par circulation de fluide caloporteur provenant d'un condenseur de la chaudière.

Ce circuit de refroidissement 515 est, par exemple, formé par un ensemble de conduits de fluide caloporteur traversant les deuxièmes éléments conducteurs 425. Dans des variantes, ce circuit de refroidissement 515 est un formé par un ensemble de conduits de fluide caloporteur traversant une peau recouvrant les deuxièmes éléments conducteurs 425.

Ce circuit de refroidissement 515 est alimenté par le fluide caloporteur en sortie du condenseur de la chaudière 50.

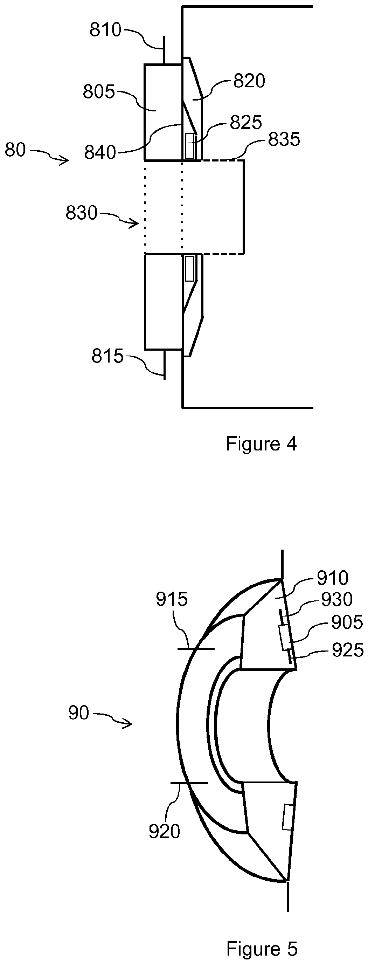

On observe, sur la figure 4, schématiquement, une vue en coupe et de profil d'un mode de réalisation de la porte 80 objet de la présente invention. Cette porte 80 comporte :
- une entrée 830 pour gaz, ce gaz étant alimenté par un conduit d'alimentation (non représenté) alimentant un brûleur 835 d'une chaudière,
- une pluralité de convertisseurs 825 thermoélectriques dont une face est positionnée contre une paroi 820 en matériau isolant de la chaudière, cette paroi 820 étant en contact avec l'intérieur de la chambre de combustion de la chaudière,
- une paroi 840, en métal par exemple, au contact d'une autre face de chaque convertisseur 825 thermoélectrique, cette paroi 840 étant au contact d'eau circulant depuis une entrée 815 d'eau vers une sortie 810 d'eau échauffée,
- un circuit d'eau 805 formant un anneau autour de l'entrée 830 pour gaz, ce circuit d'eau permettant la circulation d'eau de refroidissement pour que cette eau soit en contact des parois 840.

De cette manière, les parois 840 forment source froide pour les convertisseurs 825 tandis que les parois 820 forment source chaude pour ces convertisseurs 825, ce qui permet, lors de la mise en fonctionnement du brûleur 835, de générer de l'énergie électrique à partir de la différence de température entre la chambre de combustion et l'eau circulant dans le circuit d'eau 805.

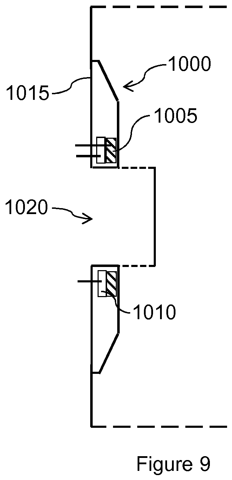

On observe, sur la figure 5, schématiquement et en perspective, un mode de réalisation de la porte 90 objet de la présente invention. On observe notamment sur cette figure 9 une structure annulaire 910 creuse permettant le passage d'eau depuis une entrée 920 d'eau vers une sortie 915 d'eau. Le centre de l'anneau permet le passage de gaz vers un brûleur (non représenté) d'une chaudière (non représentée) sur laquelle la porte 90 est fixée.

Une pluralité dé convertisseurs 905 thermoélectriques est positionnée à l'intérieur de la structure annulaire 910 contre une paroi positionnée en regard de la chambre de combustion (non représentée) de la chaudière lorsque la porte 90 est fixée à la chaudière.

De cette manière, la différence de température entre l'eau circulant dans la structure annulaire 910 et la chambre de combustion permet à chaque convertisseur 905 de générer de l'énergie électrique par effet Seebeck. Chaque convertisseur 905 comporte un connecteur électrique 930 positif et un connecteur électrique 925 négatif.

On observe, sur la figure 6, une chaudière 20 comportant :
- une pluralité de brûleurs 254 parallèles orientés verticalement positionnés dans une enceinte 250 de combustion et
- un échangeur 30 thermique comportant :
   - pour chaque brûleur, une cheminée 225 verticale positionnée en regard de l'axe d'émission des produits de combustion du brûleur,
   - pour chaque cheminée, au moins un conduit 306 vertical de circulation de fluide caloporteur au contact d'une paroi 315 de la cheminée et
   - entre au moins une cheminée et au moins un conduit, un convertisseur 305 thermoélectrique d'énergie thermique traversant la cheminée en énergie électrique par effet Seebeck,
chaque cheminée et chaque conduit étant positionné à l'intérieur de l'enceinte de combustion.

On observe également, sur la figure 6, un échangeur thermique 30. Cet échangeur 30 thermique, pour former une chaudière telle que décrite en regard de la figure 6, comporte :
- une pluralité de cheminées 225 verticales pour être positionnées en regard de l'axe d'émission des produits de combustion produits par une pluralité de brûleurs,
- pour chaque cheminée, un conduit 306 vertical de circulation de fluide caloporteur au contact d'une paroi 315 de la cheminée et
- entre au moins une cheminée et au moins un conduit au contact, un convertisseur 305 thermoélectrique d'énergie thermique traversant la cheminée en énergie électrique par effet Seebeck.

L'enceinte 250 de combustion, chaque brûleur 254, l'entrée de combustible 252 et la sortie 256 sont, par exemple, respectivement similaires à l'enceinte thermique 150, le brûleur 154, l'entrée de combustible 152 et la sortie 156 tels que décrits en regard de la figure 1.

Les brûleurs 254 sont, par exemple, organisés en rampes.

Chaque brûleur 254 est alimenté en combustible par une entrée unique 252 de combustible. Ce combustible, tel du gaz naturel, est brûlé et les produits de combustion chauds traversent la cheminée 225 jusqu'à la sortie de produits de combustion 256. Au cours de ce déplacement, les échangeurs thermiques 30 transmettent une partie de l'énergie thermique des produits de combustion à un fluide caloporteur traversant un conduit 306. L'échange thermique ainsi réalisé a lieu à travers la paroi 315 de chaque échangeur thermique 30. Cette paroi 315 est, par exemple, métallique. Cette paroi 315 présente des formes, par exemple des ailettes, réparties dans la cheminée 225, augmentant les turbulences et augmentant la surface d'échange, pour assurer un échange maximal entre les fluides gazeux et caloporteur.

Dans l'épaisseur de chaque paroi 315 est positionné un convertisseur 305 thermoélectrique d'énergie thermique générée par le brûleur en énergie électrique à effet Seebeck, ou effet thermoélectrique. Ce convertisseur 305 transmet l'énergie électrique fournie par un convertisseur à la sortie 310. Cette sortie 310 est, par exemple, un module de gestion électrique.

Dans des variantes préférentielles, plusieurs convertisseurs 305 présentant des caractéristiques structurelles différentes sont positionnés le long de l'épaisseur de la paroi 315. Ces caractéristiques structurelles varient en fonction de l'éloignement du convertisseur 305 avec le brûleur 254. Parmi ces caractéristiques structurelles, on note par exemple le choix du matériau formant le convertisseur 305 ou les dimensions du convertisseur 305. Ce matériau est choisi en fonction d'un couple déterminé de températures des produits de combustion et du fluide caloporteur séparés par l'échangeur thermique 30. Ce choix de matériau permet au convertisseur 305 de fournir un meilleur rendement énergétique.

Dans ces variantes, les convertisseurs 305 sont étagés dans chaque échangeur 30.

Préférentiellement, le fluide caloporteur est entré dans l'échangeur 30 à proximité de la sortie 256 et sorti à proximité des brûleurs 254.

Le système électrique de la chaudière 20 est, par exemple, un circuit électronique de commande configuré pour commander au moins l'une des fonctions suivantes :
- l'entrée d'électricité venant des modules convertisseurs 310, à raison par exemple d'une entrée par étage de convertisseurs 310,
- la charge et la décharge de la batterie,
- l'alimentation des moyens électriques internes de la chaudière 20,
- l'alimentation d'un onduleur, de type 230V par exemple, destiné à des dispositifs externes dans le cas où la chaudière 20 vise à alimenter ces dispositifs externes et/ou
- la modulation de la puissance électrique sortante, par la réinjection de l'excédent d'électricité vers une résistante chauffant le fluide caloporteur en sortie de chaudière 20.

Le système électrique de la chaudière comporte, de plus, un circuit électronique de régulation configuré pour commander au moins l'une des fonctions suivantes :
- le démarrage et la modulation et la mise en sécurité de chaque brûleur 254,
- la modulation d'une puissance transmise à un ventilateur d'extraction de produits de combustion,
- la position d'une vanne trois voies pour la répartition du fluide caloporteur chaud entre le chauffage et l'eau chaude sanitaire et/ou
- le pilotage du système de gestion de l'énergie électrique tel que décrit ci-dessus.

Le convertisseur 310 peut couvrir environ 80% de la surface de la paroi 315.

L'échangeur thermique 30 peut comporter un moyen 325 de condensation de produits de combustion en sortie de chaque cheminée 225. Dans ces variantes, l'échangeur thermique 30 est, par exemple, un échangeur condenseur à plaque dans l'épaisseur duquel est positionné éventuellement un convertisseur 310.

La chaudière 20 est divisée en deux parties, telles les chaudières à condensation classiques :
- la première partie, équipée de convertisseurs 310, permet au fluide caloporteur de récupérer la majeure partie de la puissance thermique de chaque brûleur 254 et
- la deuxième partie est un échangeur condenseur qui achève de récupérer les l'énergie restant sur les produits de combustion sortant du premier échangeur.

Telle que représentée en figure 6, la chaudière 20 comporte un ensemble de collecteurs 358 pour condensats de produits de combustion dans lequel chaque collecteur 358 est positionné sous un chemin de déplacement des produits de combustion.

Les convertisseurs 310 absorbant une partie de l'énergie thermique générée par les brûleurs 254, la puissance aux brûleurs 254 peut être augmentée pour compenser la perte thermique occasionnée.

Au moins un convertisseur 310 peut être au contact :
- d'une part, d'une plaque au contact des produits de combustion et
- d'autre part, d'une plaque au contact du fluide caloporteur.

Ces plaques sont, par exemple, les deux faces de la paroi 315, l'une de ces faces étant au contact des produits de combustion, et l'autre face étant au contact du fluide caloporteur.

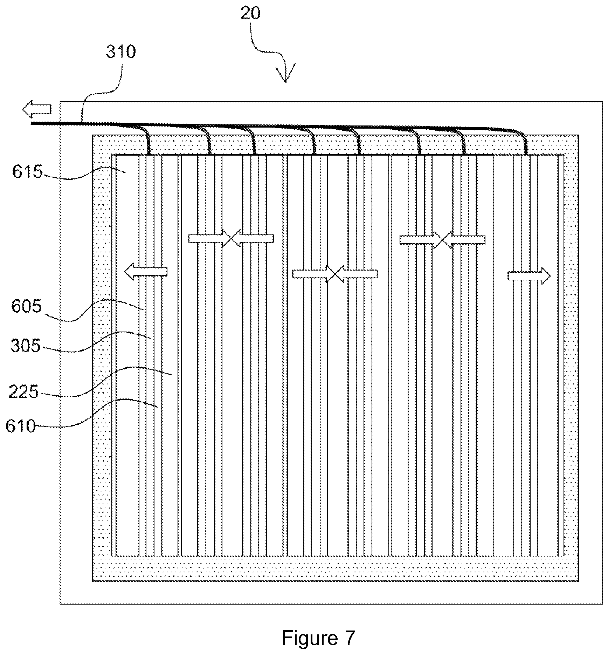

On observe, sur la figure 7, schématiquement, une vue en coupe, de la chaudière 20 illustrée sur la figure 6, selon l'axe A-A. Sur cette figure 7, on observe notamment :
- une pluralité de convertisseurs 305 thermoélectriques, chaque convertisseur 305 étant au contact :
   - d'une paroi 605 au contact d'une conduite 615 du fluide caloporteur et
   - d'une paroi 610 au contact des produits de combustion de la cheminée 225 et
- une sortie 310 de l'énergie électrique, fournie par chaque convertisseur 305, à un module de gestion de l'énergie électrique.

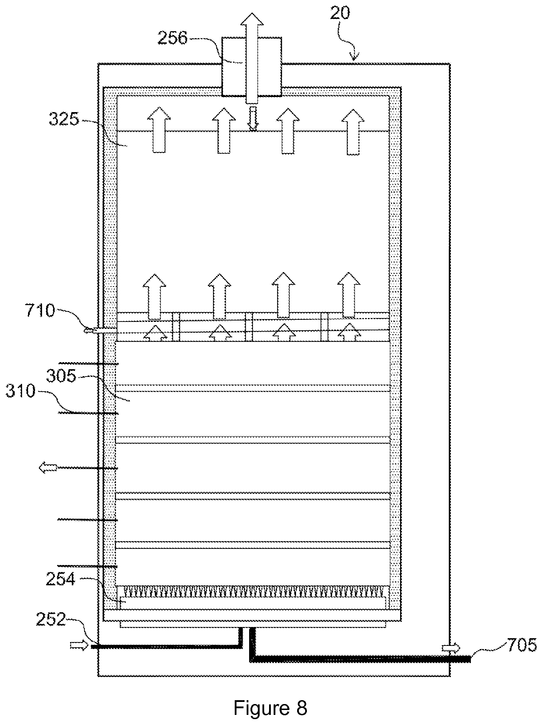

On observe, sur la figure 8, schématiquement, une vue en coupe, de la chaudière 20 illustrée sur la figure 6, selon l'axe B-B. Sur cette figure 8, on observe notamment :
- un brûleur 254 alimenté par une entrée 252 de combustible et
- une sortie 256 pour produits de combustion,
- une sortie 705 pour fluide caloporteur échauffé,
- une pluralité de convertisseurs 305 thermoélectriques étagés et dont les caractéristiques structurelles varient en fonction de l'étage de positionnement,
- une sortie 310 d'un module de gestion électrique de la chaudière 20,
- un moyen de condensation 325 des produits de combustion et
- une sortie 710 de condensats.

On observe, sur la figure 9, un mode de réalisation particulier de la porte 1000 objet de la présente invention. Cette porte 1000 comporte une structure 1015 creuse configurée pour entourer une ouverture 1020 de la porte, le convertisseur 1005 étant positionné au contact :
- d'une part, d'une première partie conductrice de la structure 1015 orientée vers des produits de combustion de la chambre de combustion de la chaudière, formant source chaude du convertisseur et
- d'autre part, d'une deuxième partie conductrice de la structure 1015 orientée vers un fluide caloporteur de la chaudière formant source froide du convertisseur.

La structure 1015 présente, par exemple, une forme de tore entourant l'ouverture 1020 de la porte 1000. Cette structure 1015, préférentiellement réalisée en métal, est fixée à la porte de manière à être positionnée dans la chambre de combustion lorsque la porte est fixée à la chaudière.

Cette structure 1015 présente ainsi deux peaux formées par les première et deuxième parties conductrices, la première étant orientée vers la chambre de combustion et la deuxième étant orientée vers l'extérieur de la chambre de combustion.

Chaque convertisseur 1005 est positionné à l'intérieur de la structure 1015, entre les parties conductrices.

Chaque convertisseur 1005 comporte une sortie de l'énergie électrique produite, cette sortie visant à alimenter un système électrique de la chaudière.

Dans des modes de réalisation préférentiels, la porte 1000 comporte une pluralité de convertisseurs 1005 répartis autour de l'ouverture 1020 de la porte 1000.

Dans des modes de réalisation préférentiels, un échangeur thermique 1010 est positionné en regard de chaque convertisseur 1005, chaque échangeur thermique 1010 étant traversé par un fluide caloporteur.

Chaque échangeur thermique 1010 est similaire à l'élément conducteur 425 décrit en regard de la figure 2.

L'ensemble formé par la structure 1015, chaque convertisseur 1005 et chaque échangeur thermique 1010 peut être fabriqué indépendamment des autres éléments formant porte 1000. Cet ensemble, fixé sur une partie extérieure de la porte 1000, pour être positionnée à l'intérieur de la chambre de combustion, ne nécessite pas d'adaptation des composants internes de la porte 1000.

## Revendications

1. Porte (40) pour chaudière électriquement autonome comportant une chambre de combustion munie d'au moins un brûleur et un système électrique agencé pour assurer le fonctionnement de la chaudière, ladite porte étant **caractérisée par le fait qu'**elle comporte:
- un convertisseur (405) thermoélectrique d'énergie thermique en énergie électrique par effet Seebeck configuré pour convertir de l'énergie thermique générée par ledit au moins un brûleur en énergie électrique, et
- une sortie (410) de l'énergie électrique fournie par ledit convertisseur configurée pour fournir de l'énergie électrique à un système électrique de la chaudière,
le convertisseur thermoélectrique d'énergie étant positionné au contact :
- d'une part, d'un premier élément (415) conducteur de la porte configuré pour être orienté vers des produits de combustion de la chambre (420) de combustion de la chaudière, formant source chaude du convertisseur et
- d'autre part, d'un deuxième élément (425) conducteur configuré pour être orienté vers un fluide caloporteur de la chaudière formant source froide du convertisseur.

2. Porte (40) selon la revendication 1, qui comporte un circuit (515) de refroidissement du deuxième élément (425) conducteur par circulation de fluide caloporteur provenant d'un condenseur de la chaudière.

3. Porte (1000) selon l'une des revendications 1 ou 2, qui comporte une structure (1015) creuse entourant une ouverture (1020) de la porte, le convertisseur (1005) étant positionné au contact :
- d'une part, d'une première partie conductrice de la structure configurée pour être orientée vers des produits de combustion de la chambre de combustion de la chaudière, formant source chaude du convertisseur et
- d'autre part, d'une deuxième partie conductrice de la structure configurée pour être orientée vers un fluide caloporteur de la chaudière formant source froide du convertisseur.

4. Porte (40) selon l'une des revendications 1 à 3, dans laquelle ladite sortie (410) d'énergie électrique fournie par ledit convertisseur est configurée pour alimenter un dispositif externe à la chaudière.

5. Porte (40) selon l'une des revendications 1 à 4, qui comporte un moyen (411) de stockage de l'énergie électrique fournie par ledit convertisseur pour alimenter le système électrique de la chaudière.

6. Porte (40) selon l'une des revendications 1 à 5, dans laquelle ledit convertisseur (405) thermoélectrique est configuré pour alimenter un transformateur (412) alimentant un module (413) de chauffage d'eau électrique.

7. Chaudière (10) électriquement autonome **caractérisée en ce qu'**elle comporte une chambre de combustion munie d'au moins un brûleur, un système électrique agencé pour assurer le fonctionnement de la chaudière et une porte selon l'une des revendications 1 à 6.

## Patentansprüche

1. Tür (40) für einen elektrisch autonomen Heizkessel, umfassend eine Verbrennungskammer, die wenigstens mit einem Brenner versehen ist, und ein elektrisches System, das angeordnet ist, um den Betrieb des Heizkessels zu gewährleisten, wobei die genannte Tür durch die Tatsache gekennzeichnet ist, dass sie umfasst:
- einen thermoelektrischen Umsetzer (405) von thermischer Energie in elektrische Energie per Seebeck-Effekt, der zum Umwandeln der thermischen Energie, die von dem genannten wenigstens einen Brenner erzeugt ist, in elektrische Energie konfiguriert ist, und
- einen Ausgang (410) der elektrischen Energie, die von dem genannten Umsetzer geliefert ist, der zum Liefern der elektrischen Energie an ein elektrisches System des Heizkessels konfiguriert ist,
wobei der thermoelektrische Energie-Umsetzer kontaktierend positioniert ist:
- einerseits an einem ersten leitenden Element (415) der Tür, das konfiguriert ist, um zu den Verbrennungsprodukten der Verbrennungskammer (420) des Heizkessels ausgerichtet zu sein und eine heiße Quelle des Umsetzers zu formen, und
- andererseits an einem zweiten leitenden Element (425), das konfiguriert ist, um zu einem Kühlmittel-Medium des Heizkessels ausgerichtet zu sein, das eine Kühlquelle des Wandlers bildet.

2. Tür (40) gemäß Anspruch 1, die einen Kühlkreislauf (515) des zweiten leitenden Elements (425) per Umlauf des Kühlmittel-Mediums umfasst, das aus einem Kondensator des Heizkessels stammt.

3. Tür (1000) gemäß einem der Ansprüche 1 oder 2, die eine hohle Struktur (1015) umfasst, die eine Öffnung (1020) der Tür umfasst, wobei der Umsetzer (1005) kontaktierend positioniert ist:
- einerseits an einem ersten leitenden Teil der Struktur, der konfiguriert ist, um zu den Verbrennungsprodukten der Verbrennungskammer des Heizkessels ausgerichtet zu sein und eine heiße Quelle des Umsetzers zu formen, und
- andererseits an einem zweiten leitenden Teil der Struktur, die konfiguriert ist, um zu einem Kühlmittel-Medium des Heizkessels ausgerichtet zu sein, das eine Kühlquelle des Wandlers bildet.

4. Tür (40) gemäß einem der Ansprüche 1 bis 3, bei dem der genannte Ausgang (410) der elektrischen Energie, die von dem genannten Umsetzer geliefert ist, konfiguriert ist, um eine externe Vorrichtung des Heizkessels zu versorgen.

5. Tür (40) gemäß einem der Ansprüche 1 bis 4, die ein Lagermittel (411) der elektrischen Energie umfasst, die von dem genannten Umsetzer geliefert ist, um das elektrische System des Heizkessels zu versorgen.

6. Tür (40) gemäß einem der Ansprüche 1 bis 5, bei der der genannte thermoelektrische Umsetzer (405) konfiguriert ist, um einen Umformer (412) zu versorgen, der ein elektrisches Heizmodul (413) für Wasser versorgt.

7. Elektrisch autonomer Heizkessel (10), **dadurch gekennzeichnet, dass** er eine Verbrennungskammer umfasst, die wenigstens mit einem Brenner, einem elektrischen System, das zum Gewährleisten des Betriebs des Heizkessels und einer Tür gemäß einem der Ansprüche 1 bis 6 angeordnet ist, versehen ist.

## Claims

1. Door (40) for an electrically self-sufficient boiler comprising a combustion chamber fitted with at least one burner and an electrical system arranged to ensure the operation of the boiler, said door being **characterized in that** it comprises:
- a thermoelectric converter (405) for converting thermal energy into electrical energy using the Seebeck effect, configured to convert the thermal energy generated by said at least one burner into electrical energy; and
- an outlet (410) for the electrical energy provided by said converter, configured to provide the electrical power to an electrical system of the boiler;
the thermoelectric converter for converting thermal energy being positioned in contact with:
- firstly, a first conducting element (415) configured to be oriented toward combustion products of the boiler combustion chamber (420), forming the hot source of the converter; and
- secondly, a second conducting element (425) configured to be oriented toward a heat-transfer fluid of the boiler, forming the cold source of the converter.

2. Door (40) according to claim 1, which comprises a circuit (515) for cooling the second conducting element (425) by circulating heat-transfer fluid coming from a condenser of the boiler.

3. Door (1000) according to one of claims 1 or 2, which comprises a hollow structure (1015) surrounding an opening (1020) of the door, the converter (1005) being positioned in contact with:
- firstly, a first conducting portion of the structure configured to be oriented toward combustion products of the boiler combustion chamber, forming the hot source of the converter; and
- secondly, a second conducting portion of the structure configured to be oriented toward a heat-transfer fluid of the boiler, forming the cold source of the converter.

4. Door (40) according to one of claims 1 to 3, wherein said outlet (410) for electrical energy supplied by said converter is configured to power a device external to the boiler.

5. Door (40) according to one of claims 1 to 4, which comprises a means (411) for storing the electrical energy provided by said converter to power the boiler's electrical system.

6. Door (40) according to one of claims 1 to 5, wherein said thermoelectric converter (405) is configured to power a transformer (412) powering an electrical water heating unit (413).

7. Electrically self-sufficient boiler (10) **characterized in that** it comprises a combustion chamber fitted with at least one burner; an electrical system arranged to ensure the operation of the boiler; and a door according to one of claims 1 to 6.
